## Europäisches Patentamt
## European Patent Office
## Office européen des brevets

(19)

(11) Numéro de publication: **0 015 172**
**B1**

(12) **FASCICULE DE BREVET EUROPEEN**

(45) Date de publication du fascicule de brevet: **04.11.81**

(51) Int. Cl.³: **B 60 S 1/34**

(21) Numéro de dépôt: **80400106.3**

(22) Date de dépôt: **23.01.80**

(54) Essuie-glace monté sur un véhicule automobile.

(30) Priorité: **22.02.79 FR 7904526**

(43) Date de publication de la demande:
**03.09.80 Bulletin 80/18**

(45) Mention de la délivrance du brevet:
**04.11.81 Bulletin 81/44**

(84) Etats Contractants Désignés:
**DE GB IT**

(56) Documents cités:
**DE - A - 2 104 331**
**FR - A - 1 288 741**
**FR - A - 2 200 815**
**US - A - 3 213 478**
**US - A - 3 263 261**
**US - A - 3 440 679**

(73) Titulaire: **AUTOMOBILES PEUGEOT**
**75, avenue de la Grande Armée**
**F-75116 Paris (FR)**

(73) Titulaire: **SOCIETE ANONYME AUTOMOBILES CITROEN**
**117 à 167, Quai André Citroen**
**F-75747 Paris Cedex 15 (FR)**

(72) Inventeur: **Hamon, Jean**
**41 bis rue Charles Floquet**
**F-92500 Rueil (FR)**

(74) Mandataire: **Moncheny, Michel et al,**
**c/o Cabinet Lavoix 2 Place d'Estienne d'Orves**
**F-75441 Paris Cedex 09 (FR)**

Courier Press, Leamington Spa, England.

Essuie-glace monté sur un véhicule automobile

La présente invention se rapporte aux essuie-glaces montés sur les véhicules automobiles.

Les dispositifs d'entraînement des essuie-glaces comportent habituellement un arbre portant un moyeu sur lequel est articulé un balai ou porte-raclette, cet arbre étant monté rotatif sur un support rigide et s'étendant à travers une ouverture du panneau d'auvent situé à la base du pare-brise, entre ce dernier et le capot avant.

Or, un tel arbre présente une grande rigidité et, faisant saillie par rapport au panneau d'auvent, il constitue un facteur d'aggravation des blessures pour un piéton ou un cycliste, qui, dans un accident, serait projeté sur le capot du véhicule.

On connaît par ailleurs par le brevet US 3 213 478 (Pollock) un agencement dans lequel une fente est délimitée entre le bord arrière du panneau d'auvent et la pare-brise, cette fente s'étendant sur toute la largeur du pare-brise et autorisant le mouvement de va-et-vient de l'essuie-glace, l'extrémité externe de l'arbre d'entraînement de l'essuie-glace étant située en retrait par rapport au panneau d'auvent. Cette disposition de l'ouverture autorisant le passage et le mouvement du balai offre l'inconvénient de laisser un passage important pour la pénétration des corps étrangers, dans un espace difficile à nettoyer, ce qui peut empêcher le fonctionnement de l'essuie-glace.

L'invention a pour but de réaliser un montage qui permette de remédier à ces divers inconvénients sans pour autant nuire à l'esthétique.

Elle s'applique à un essuie-glace monté sur un véhicule, dans lequel un balai est articulé sur un moyeu porté par l'extrémité externe d'un arbre d'entraînement monté rotatif sur un support, l'ensemble s'étendant à travers une ouverture ménagée dans un panneau d'auvent, l'extrémité externe de l'arbre étant en retrait par rapport un panneau d'auvent.

Cet agencement est caractérisé en ce que le moyeu porte un bras déporté obliquement vers l'extérieur et sur lequel est articulé le balai, et l'ensemble du moyeu et du bras est enrobé dans un bloc de matériau amortisseur, l'ouverture ménagée dans le panneau d'auvent étant délimitée par un cylindre concentrique à l'axe de l'arbre d'entraînement de l'essuie-glace, et le bloc de matériau amortisseur comportant dans une zone adjacente à ladite ouverture une portion cylindrique, également concentrique à l'axe précité, de diamètre légèrement inférieur à celui de l'ouverture.

Suivant une autre caractéristique, un espace libre est ménagé entre l'extrémité externe du bras et la panneau d'auvent, suivant une direction à peu près perpendiculaire à ce panneau.

Un exemple de réalisation fait l'objet de la description qui suit, en référence aux dessins joints dans lesquels:

—la Fig. 1 est une coupe en élévation d'un dispositif conforme à l'invention;

—la Fig. 2 est une vue suivant la flèche F de la Fig. 1.

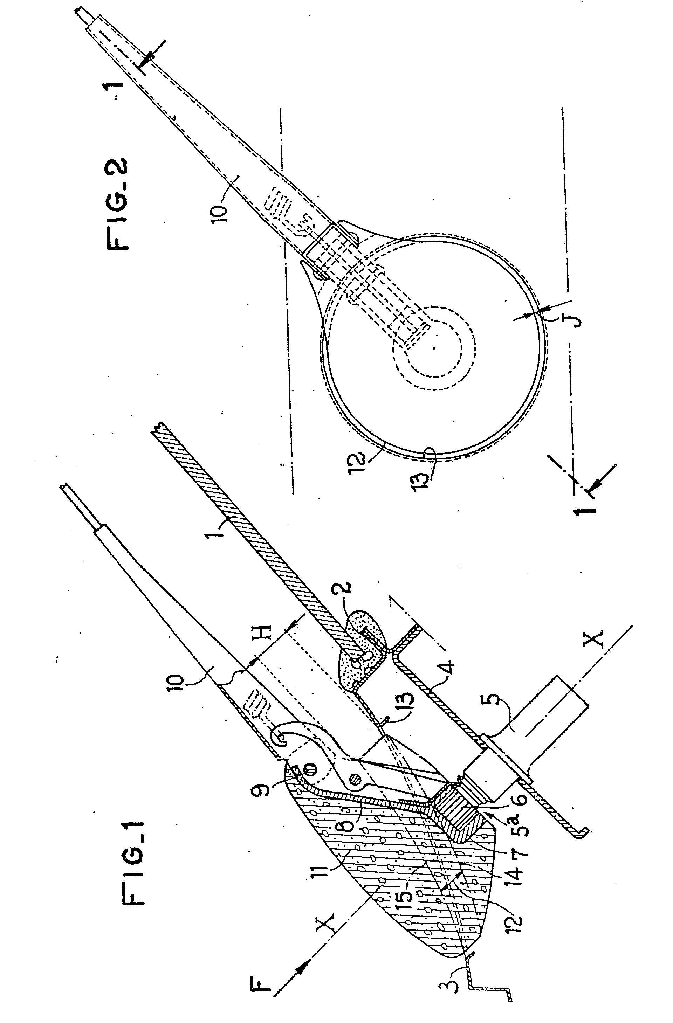

La Fig. 1 représente une partie d'un pare-brise 1, monté dans un feuillure 2, au-dessus d'un panneau extérieur d'auvent 3.

Un support rigide 4 de la caisse porte un arbre 5 entraîne de façon habituelle à partir d'un moteur électrique ou autre (non représenté). L'extrémité $5^a$ de cet arbre 5, dirigée vers l'extérieur, est en retrait par rapport au panneau d'auvent 3. Elle présente une partie cannelée 6 sur laquelle est emmanché au moyeu 7. Ce dernier porte un bras 8, déporté obliquement vers l'extérieur, et sur lequel est articulé en 9, un porte-raclette ou balai 10. Le déport du bras 8 ménage un espace libre H par rapport au panneau d'auvent 3, suivant une direction à peu près perpendiculaire à ce panneau.

L'ensemble constitué par le moyeu 7 et son bras 8 est enrobé dans un bloc 11 en matériau amortisseur non agressif par sa dureté, par exemple une mousse de matériau élastomère ou équivalent. Ce bloc peut être moulé directement sur le moyeu, ou rapporté par collage, enclenchement élastique ou tout autre moyen.

La surface extérieure de ce bloc présente, au droit du panneau d'auvent 3, une portion de cylindre 12 concentrique à l'axe X—X de l'arbre de commande 5, tandis que le panneau 3 délimite une ouverture 13 également concentrique à l'axe X—X et ménageant par conséquent un jeu constant J par rapport à cette portion de cylindre 12 (Fig. 2).

Cette dernière est limitée par deux lignes courbes 14, 15 et offre une hauteur telle qu'elle se trouve toujours vis-à-vis du bord intérieur de l'ouverture 13 du panneau 3, d'une position angulaire extrême à l'autre de l'arbre de commande 5.

Le dispositif décrit permet bien d'atteindre le premier but fixé puisque le contact accidentel d'un corps humain avec l'arbre de commande est remplacé par un contact avec le bloc 11 en matériau amortisseur. De plus, l'espace H ménagé entre le panneau d'auvent 3 et le bras 8 permet à ce dernier de se déformer par flexion sous l'effet du choc en absorbant de l'énergie.

Enfin, le dispositif empêche la pénétration de corps étrangers et sauvegarde l'esthétique puisqu'aucun espace n'apparaît entre le bloc 11 et l'ouverture du panneau d'auvent 3, quelle que soit la position angulaire de l'arbre de commande 5.

## Revendications

1. Essuie-glace monté sur un véhicule automobile, dans lequel un balai (10) est articulé sur un moyeu (7) porté par l'extrémité externe (5ª) d'un arbre d'entraînement (5) monté rotatif sur un support (4), l'ensemble s'étendant à travers une ouverture ménagée dans un panneau d'auvent (3), l'extrémité externe (5ª) de l'arbre (5) étant en retrait par rapport au panneau d'auvent (3), caractérisé en ce que le moyeu (7) porte un bras (8) déporté obliquement vers l'extérieur et sur lequel est articulé le balai, et l'ensemble du moyeu (7) et du bras (8) est enrobé dans un bloc de matériau amortisseur, l'ouverture (13) ménagée dans le panneau d'auvent (3) étant délimitée par un cylindre concentrique à l'axe de l'arbre (5) d'entraînement de l'essuie-glace, et le bloc de matériau amortisseur comportant dans une zone adjacente à ladite ouverture (13) une portion cylindrique, également concentrique à l'axe précité, de diamètre légèrement inférieur à celui de l'ouverture (13).

2. Essuie-glace suivant la revendication 1, caractérisé en ce qu'un espace libre (H) est ménagé entre l'extrémité externe du bras (8) et le panneau d'auvent (3) suivant une direction à peu près perpendiculaire à ce panneau.

## Claims

1. Wind screen-wiper mounted on an automobile vehicle in which a blade (10) is pivotally mounted on a hub (7) carried out the outer end (5ª) of a driving shaft (5) rotatably mounted on a support (4), the assembly extending through an opening formed in a scuttle panel (3), the outer end (5ª) of the shaft (5) being set back relative to the scuttle panel (3), characterized in that the hub (7) carries an arm (8) which is obliquely outwardly offset and on which the blade is pivotally mounted, and the assembly comprising the hub (7) and the arm (8) is enclosed in a block of shock-absorbing material, the opening (13) formed in the scuttle panel (3) being defined by a cylinder concentric with the axis of the driving shaft (5) of the wind screen-wiper, and the block of shock-absorbing material comprising in a region adjacent to said opening (13) a cylindrical portion which is also concentric with said axis and has a diameter slightly smaller than the diameter of the opening (13).

2. Wind screen-wiper according to claim 1, characterized in that a free space (H) is left between the outer end of the arm (8) and the scuttle panel (3) in a direction roughly perpendicular to said panel.

## Patentansprüche

1. An einem Kraftfahrzeug befestigter Scheibenwischer, bei dem ein Wischerarm an einer Nabe (7) angelenkt ist, die am äusseren Ende (5ª) einer an einem Träger (4) drehbar gelagerten Antriebswelle (5) befestigt ist, wobei sich die Anordnung durch eine in der Windlaufplatte (3) ausgebildete Öffnung erstreckt und das äussere Ende (5ª) der Welle (5) gegenüber der Windlaufplatte (3) zurückversetzt ist, dadurch gekennzeichnet, dass die Nabe (7) einen Hebel (8) trägt, der nach aussen schräg abgesetzt ist und an dem der Wischerarm angelenkt ist, und dass die Anordnung der Nabe (7) und des Hebels (8) in einem Block aus Dämpfungsmaterial eingeschlossen ist, wodurch die in der Windlaufplatte (3) ausgebildete Öffnung (13) durch einen zur Achse der Antriebswelle (5) für den Scheibenwischer konzentrischen Zylinder begrenzt ist und der Block aus Dämpfungsmaterial in einer an die Öffnung (13) angrenzenden Zone einen zylindrischen Teil aufweist, der zur angegebenen Achse ebenfalls konzentrisch ist und einen geringfügig kleineren Durchmesser als die Öffnung (13) hat.

2. Scheibenwischer nach Anspruch 1, dadurch gekennzeichnet, dass zwischen dem äusseren Ende des Hebels (8) und der Windlaufplatte (3) in einer zu dieser Platte etwa senkrechten Richtung ein freier Zwischenraum (H) ausgebildet ist.

FIG.2

FIG.1